# EUROPÄISCHE PATENTSCHRIFT

(11) **EP 1 814 946 B1**
(45) Veröffentlichungstag und Bekanntmachung des Hinweises auf die Patenterteilung: **19.12.2012**
(21) Anmeldenummer: 05801742.7
(22) Anmeldetag: 09.11.2005
(51) Int. Cl.: C08L 53/02, C08F 297/04, C08K 3/00, C08J 3/22

(54) **MASTERBATCH AUF BASIS VON STYROL-BUTADIEN-BLOCKCOPOLYMEREN**
MASTER BATCH BASED ON STYRENE BUTADIENE BLOCK COPOLYMERS
MELANGE MAITRE A BASE DE COPOLYMERES SEQUENCES DE STYRENE-BUTADIENE

(30) Priorität: 17.11.2004 DE 102004055539
(43) Veröffentlichungstag der Anmeldung: 08.08.2007
(73) Patentinhaber: Styrolution GmbH, 60325 Frankfurt (DE)
(72) Erfinder: HUBER, Robert, 67117 Limburgerhof (DE); MORGENSTERN, Herbert, 67158 Ellerstadt (DE); BURGDÖRFER, Stefan, 67112 Mutterstadt (DE)
(74) Vertreter: Jacobi, Markus Alexander
(86) Internationale Anmeldenummer: PCT/EP2005/011997
(87) Internationale Veröffentlichungsnummer: WO 2006/053663

(56) Entgegenhaltungen:
- WO-A-00/66662
- WO-A-96/23823
- WO-A-99/46330
- US-B1- 6 177 517
- US-B1- 6 521 712
- US-B1- 6 579 937

## Beschreibung

Die Erfindung betrifft eine Mischung, enthaltend
A) mindestens 40 Gew.-% eines thermoplastischen Elastomeren auf Basis von Styrol (S-TPE),
B) 20 bis 60 Gew.-% eines organischen oder anorganischen Füllstoffes, ausgewähtt aus Holzmehl, Titandioxid, Talk, Kreide, Kaolin, Ruß, Aluminiumhydroxid, Magnesiumhydroxid, Aluminiumnitrit, Aluminiumsilikat, Bariumsulfat, Calciumcarbonat, Calciumsulfat, Kieselsäure, Quarzmehl, Aerosil, Tonerde, Wollastonit oder Farbpigmenten.
C) 0.1 bis 10 Gew.-% eines Dispergierhilfsmittels, ausgewählt aus Polyethylenwachs oder Stearaten,
wobei die Summe aus A), B) und C) 100 Gew.-% ergibt.

Schlagzähe thermoplastische Styrol-Acrylnitril-Copolymere (SAN) mit Propfkautschuken auf Basis von Polybutadien oder Acrylester sind dem Fachmann als ABS- bzw. ASA bekannt. Zur Veränderung des Eigenschaftsprofils werden diese auch mit anderen thermoplastischen Polymeren, insbesondere Polycarbonat (PC) oder Polyamid (PA) zu Blends verarbeitet.

Die WO 00/36010 beschreibt thermoplastische Formmassen aus ABS- oder ASA-Polymeren, die zur Verbesserung der Fließfähigkeit bei gleichzeitig guter Entformbarkeit mit elastomeren Styrol-Butadien-Blockcopolymeren gemischt werden.

Aus der WO 99/46330 sind Mischungen aus elastomeren und steifen Styrol-Butadien-blockcopolymeren mit Polystyrol bekannt.

Die Einfärbung dieser thermoplastischen Formmassen erfolgt in der Regel über sogenannte Masterbatche auf Basis von leichtfließenden thermoplastischen Trägerpolymeren, die Farbpigment in hohen Konzentrationen enthalten. Als thermoplastische Trägerpolymere werden in der Regel Polyolefine oder Polymere mit ähnlicher Struktur und guter Verträglichkeit zum einzufärbenden Polymer verwendet. Üblicherweise weisen die eingefärbten thermoplastischen Formmassen aufgrund der Farbpigmente und der Trägerpolymeren für den Masterbatch verschlechterte mechanischen Eigenschaften, insbesondere eine geringere Zähigkeit auf.

Insbesondere bei Masterbatchen mit hohem anorganischen Anteil, wie mineralische Füllstoffe und Titandioxid ist eine hohe Fließfähigkeit des Masterbatches im einzufärbenden Polymer von Vorteil. Polymere mit hoher Zähigkeit haben oftmals nicht die notwendige leichte Fließfähigkeit oder sind nicht mit dem Basispolymer kompatibel um als Trägerpolymer für Masterbatche eingesetzt zu werden.

Masterbatches werden auf Verarbeitungsmaschinen mit hoher Scherung hergestellt, damit die Komponenten gut homogenisiert werden. Das Trägerpolymer muss daher eine ausreichende Verarbeitungsstabilität aufweisen, damit keine Vergilbung und Vernetzung auftritt.

Aufgabe der Erfindung war es daher, eine verarbeitungsstabile Mischung zu finden, die als Masterbatch zur Modifizierung und Einfärbung von thermoplastischen Polymeren, insbesondere Styrolpolymeren geeignet ist und gleichzeitig die mechanischen Eigenschaften, insbesondere Zähigkeit verbessert.

Demgemäss wurde die oben genannte Mischung gefunden.

Besonderes bevorzugt enthält die Mischung
A) mindestens 40 Gew.- eines thermoplastischen Elastomeren auf Basis von Styrol (S-TPE),
B) 20 bis 60 Gew.-% eines organischen oder anorganischen Füllstoffes, ausgewählt aus Holzmehl, Titandioxid, Talk, Kreide, Kaolin, Ruß, Aluminiumhydroxid, Magnesiumhydroxid, Aluminiumnitrit, Aluminiumsilikat, Bariumsulfat, Calciumcarbonat, Calciumsulfat, Kieselsäure, Quarzmehl, Aerosil, Tonerde, Wollastonit oder Farbpigmenten,
C) 0,1 bis 5 Gew.-% eines Dispergierhilfsmittels, ausgewählt aus Polyethylenwachs oder Stearaten,
wobei die Summe aus A), B) und C) 100 Gew.-% ergibt.

### Komponente A

Bevorzugt weist das S-TPE eine Reißdehnung von mehr als 300 %, besonders bevorzugt mehr als 500 %, insbesondere mehr als 600 %, gemessen nach ISO 527, auf. Besonders bevorzugt mischt man als S-TPE ein lineares oder sternförmiges Styrol-Butadien-Blockcopolymer mit außenliegenden Polystyrolblöcken S und dazwischenliegenden Styrol-Butadien-Copolymerblöcken mit statistischer Styrol/Butadien-Verteilung (S/B)_{random} oder einem Styrolgradienten (S/B)ₜₐₚₑᵣ zu.

Der Gesamtbutadiengehalt liegt bevorzugt im Bereich von 15 bis 50 Gew.-%, besonders bevorzugt im Bereich von 25 bis 40 Gew.-%, der Gesamtstyrolgehalt liegt entsprechend bevorzugt im Bereich von 50 bis 85 Gew.-%, besonders bevorzugt im Bereich von 60 bis 75 Gew.-%.

Vorzugsweise besteht der Styrol-Butadien-Block (S/B) aus 30 bis 75 Gew.-% Styrol und 25 bis 70 Gew.-% Butadien. Besonders bevorzugt hat ein Block (S/B) einen Butadienanteil von 35 bis 70 Gew.-% und einen Styrolanteil von 30 bis 65 Gew-%.

Der Anteil der Polystyrolblöcke S liegt bevorzugt im Bereich von 5 bis 40 Gew.-%, insbesondere im Bereich von 25 bis 35 Gew.-%, bezogen auf das gesamte Blockcopolymer. Der Anteil der Copolymerblöcke S/B liegt bevorzugt im Bereich von 60 bis 95 Gew.-%, insbesondere im Bereich von 65 bis 75 Gew.-%.

Besonders bevorzugt sind lineare Styrol-Butadien-Blockcopolymere der allgemeinen Struktur S-(S/B)-S mit ein oder mehreren, zwischen den beiden S-Blöcken liegenden, eine statische Styrol/Butadien-Verteilung aufweisenden Blöcken (S/B)_{random}. Solche Blockcopolymeren sind durch anionische Polymerisation in einem unpolaren Lösungsmittel unter Zusatz eines polaren Cosolvens oder eines Kaliumsalzes erhältlich, wie beispielsweise in WO 95/35335 bzw. WO 97/40079 beschrieben.

Als Vinylgehalt wird der relative Anteil an 1,2-Verknüpfungen der Dieneinheiten, bezogen auf die Summe der 1,2-, 1,4-cis und 1,4-trans-Verknüpfungen verstanden. Der 1,2-Vinylgehalt im Styrol-Butadien-Copolymerblock (S/B) liegt bevorzugt unter 20 %, insbesondere im Bereich von 10 bis 18%, besonders bevorzugt im Bereich von 12 - 16 %.

### Komponente B

Geeignete organische Füllstoffe als Komponente B sind beispielsweise Holzmehl.

Als anorganische Füllstoffe kommen zum Beispiel Titandioxid, Talk, Kreide, Kaolin, Ruß, Aluminiumhydroxid, Magnesiumhydroxid, Aluminiuninitrit, Aluminiumsilikat, Bariumsulfat, Calciumcarbonat, Calciumsulfat, Kieselsäure, Quarzmehl, Aerosil, Tonerde, Wollastonit oder Farbpigmente in Betracht

### Komponente C

Den Mischungen werden ferner Dispergierhilfsmittel, wie Polyethylenwachse oder Stearate, wie Magnesium- oder Calciumstearat zugesetzt.

Die erfindungsgemäße Mischung kann nach an sich bekannten Mischverfahren erfolgen, beispielsweise durch Zugabe der Komponente B) und gegebenenfalls C) zu einer Schmelze von Komponente A). Zweckmäßigerweise verwendet man hierzu Extruder, z. b. Einschnecken- oder Zweischneckenextruder oder ander herkömmliche Piastifizierungssvorrichtungen, wie Brabender-Mühlen oder Banbury-Mischer.

Die erfindungsgemäßen Mischungen eigenen sich als Masterbatch zur Additivierung, insbesondere zur Einfärbung von thermoplastischen Polymeren durch Compoundierung. Hierbei wird in der Regel 1 bis 30, bevorzugt 5 bis 15 Gew.-% der erfindungsgemäßen Mischung, und 99 bis 70, bevorzugt 95 bis 85 Gew.-% thermoplastisches Polymer eingesetzt. Bevorzugt weist die Komponente A) in der erfindungsgemäßen Mischung einen geringeren Schmelzefließindex MFI als das thermoplastische Polymer auf.

Zum Additivieren oder Einfärben mit den erfindungsgemäßen Mischungen eignen sich als thermoplastische insbesondere die als Acrylnitril-Butadien-Styrol-Polymer (ABS) oder Acrylnitril-Styrol-Acrylester-Polymer (ASA) bekannten Polymeren. Sie bestehen in der Regel aus einer Styrol-Acrylnitril-Copolymer Matrix (SAN) mit einem mittleren Molekulargewicht M_{w} im Bereich von 40.000 bis 200.000 g/mol und einem Pfropfkautschuk. Die SAN-Matrix kann in bekannter Weise durch Substanz-, Lösungs- Suspension-, Fällungs- oder Emulsionspolymerisation erhalten werden. Der Pfropfkautschuk besteht in der Regel aus einem Pfropfkem aus einem Polydien oder Acrylester, auf den eine Propfhülle aus Styrol oder Methylmethacrylat aufgebracht ist.

Des weiteren eignen sich Standardpolystyrol (GPPS oder Homopolystyrol), Schlagzäh-Polystyrol (HIPS) oder Mischungen davon. Schlagzäh-Polystyrol kann durch Masse-oder Lösungspolymerisation von Styrol in Gegenwart von Polybutadien oder Styrol-Butadien-Blockcopolymeren erhalten werden. Dabei entsteht eine Matrix aus Polystyrol mit eingeschlossenen Kautschukpartikel, die unterschiedliche Morphologienausbilden können, z. B. Kapselteilchen oder Zellenteilchen, und unterschiedliche mittlere Teilchengrößen aufweisen können.

Die erfindungsgemäßen Mischungen zeichnen sich dadurch aus, das bei Zugabe von höheren Mengen an anorganischen Füllstoffen der Abfall der mechanischen Eigenschaften in der thermoplastischen Formmasse durch die Komponente A) kompensiert oder sogar eine Erhöhung der Zähigkeit beobachtet. Des weiteren sind die thermoplastischen Formmassen weniger empfindlich gegen Fremdpolymere und Verunreinigungen, da die Komponente A) eine gute Verträglichkeit zu verschiedenen thermoplastischen Polymeren, insbesondere zu verschiedenen Styrolpolymeren und Polyolefinen aufweist. In Abmischungen mit Standard- oder Schlagzähpolystyrol oder ABS können die erfindungsgemäßen Mischungen auch die Spannungsrissbeständigkeit erhöhen.

### Beispiele:

### Einsatzstoffe:

- ABS:: Terluran ® HI 10 (ABS der BASF Aktiengesellschaft mit MVR 220/10 von 7.0 cm³/10 min)
- SB: Styroflex ® 2G66 (Thermoplastisches Elastomer auf Basis eines Styrol-Butadien-Blockcopolymeren mit statistischem S/B-Mittelblock der BASF Aktiengesellschaft)

### Prüfmethoden:

E-Modul, Bruchspannung und Reißdehnung wurden im Zugversuch nach ISO 527-2 bestimmt.

### Masterbatch:

Die Komponente A), B) und C) wurden gemäß den Mengenangaben in Tabelle 1 zu Masterbatchen MB1, MB2 und MB3 compoundiert.

Verwendung der Masterbatche zum Einfärben von ABS

### Beispiele 1 - 3

Die Masterbatche MB1, MB2, und MB3 wurden gemäß den angebebenen Werten in Tabelle 2 mit ABS vermischt und die Zähigkeit der resultierenden Formmasse ermittelt.

**Tabelle 1: Zusammensetzung der Masterbatche in Gewichtsanteilen:**

| | MB 1 | MB 2 | MB 3 |
|---|---|---|---|
| SB | 33,3 | 50 | 71,4 |
| Titandioxid | 58,3 | 43,8 | 25 |
| Polyethylenwachs | 8,3 | 6,2 | 3,6 |

**Tabelle 2**

| | Vergleich | Beispiel 1 | Beispiel 2 | Beispiel 3 |
|---|---|---|---|---|
| Masterbatch | | MB 1 | MB 2 | MB 3 |
| Masterbatch [Gew.-%] | | 6 | 8 | 14 |
| ABS | 100 | 94 | 92 | 86 |
| SB-Anteil [Gew.-%] | | 2 | 4 | 10 |
| Titandioxid [Gew.-%] | | 3,5 | 3,5 | 3,5 |
| Reisdehnung [%] | 9,4 | 9,6 | 13,4 | 29,8 |

## Patentansprüche

1. Mischung, enthaltend
A) mindestens 40 Gew.-% eines thermoplastischen Elastomeren auf Basis von Styrol (S-TPE),
B) 20 bis 60 Gew.-% eines organischen oder anorganischen Füllstoffes, ausgewählt aus Holzmehl, Titandioxid, Talk, Kreide, Kaolin, Ruß, Aluminiumhydroxid, Magnesiumhydroxid, Aluminiumnitrit, Aluminiumsilikat, Bariumsulfat, Calciumcarbonat, Calciumsulfat, Kieselsäure, Quarzmehl, Aerosil, Tonerde, Wollastonit oder Farbpigmenten,
C) 0,1 bis 10 Gew.-% eines Dispergierhilfsmittels, ausgewählt aus Polyethylenwachs oder Stearaten,
wobei die Summe aus A), B) und C) 100 Gew.-% ergeben.

2. Mischungen nach Anspruch 1, **dadurch gekennzeichnet, dass** sie als Komponente A) ein Styrol-Butadien-Blockcopolymer der Struktur S-(S/B)-S, wobei S für einen Polystyrolblock und S/B für einen Styrol-Butadien-Copolymerblock steht, enthält.

3. Mischung nach Anspruch 2, **dadurch gekennzeichnet, dass** der Styrol-Butadien-Copolymerblock S/B der Komponente A) eine statistische Verteilung der Styrol- und Butadieneinheiten aufweist.

4. Mischungen nach einem der Ansprüche 1 bis 3, **dadurch gekennzeichnet, dass** der die Komponente A) aus 15 bis 50 Gew.-% Butadien und 50 bis 85 Gew.-% Styrol aufgebaut ist.

5. Mischung nach einem der Ansprüche 3 bis 5, **dadurch gekennzeichnet, dass** der Styrol-Butadien-Copolymerblock (S/B) der Komponente A) aus 30 bis 75 Gew.-% Styrol und 25 bis 70 Gew.-% Butadien aufgebaut ist.

6. Mischung nach einem der Ansprüche 2 bis 5, **dadurch gekennzeichnet, dass** der Anteil der Polystyrolblöcke S im Bereich von 5 bis 40 Gew.-%, bezogen auf die Komponente A), liegt.

7. Mischung nach einem der Ansprüche 2 bis 6, **dadurch gekennzeichnet, dass** der 1,2-Vinylgehalt im Styrol-Butadien-Copolymerblock (S/B) der Komponente A) unter 20 % beträgt.

8. Verfahren zum Modifizieren von thermoplastischen Polymeren, **dadurch gekennzeichnet, dass** man das thermoplastische Polymer mit einer Mischung gemäß einem der Ansprüche 1 bis 7 compoundiert.

9. Verfahren nach Anspruch 8, **dadurch gekennzeichnet, dass** man als thennoplastisches Polymer ein Acrylnitril-Butadien-Styrol-Polymer (ABS), Acrylnitril-Styrol-Acrylester-Polymer (ASA), Standard-(GPPS) oder Schlagzäh-Polystyrol (HIPS) oder Mischungen davon, einsetzt.

## Claims

1. A mixture, comprising
A) at least 40% by weight of a thermoplastic elastomer based on styrene (TPES),
B) from 20 to 60% by weight of an organic or inorganic filler, selected from wood flour, titanium dioxide, talc, chalk, kaolin, carbon black, aluminum hydroxide, magnesium hydroxide, aluminum nitrite, aluminum silicate, barium sulfate, calcium carbonate, calcium sulfate, silica, powdered quartz, Aerosil, alumina, wollastonite, or color pigments,
C) from 0.1 to 10% by weight of a dispersing agent, selected from polyethylene wax or from stearates,
where the entirety of A), B) and C) is 100% by weight.

2. The mixture according to claim 1, which comprises, as component A), a styrene-butadiene block copolymer of structure S-(S/B)-S, where S is a polystyrene block and S/B is a styrene-butadiene copolymer block.

3. The mixture according to claim 2, wherein the styrene-butadiene copolymer block S/B of component A) has random distribution of the styrene units and of the butadiene units.

4. The mixture according to any of claims 1 to 3, wherein component A) is composed of from 15 to 50% by weight of butadiene and from 50 to 85% by weight of styrene.

5. The mixture according to any of claims 3 to 5, wherein the styrene-butadiene copolymer block (S/B) of component A) is composed of from 30 to 75% by weight of styrene and from 25 to 70% by weight of butadiene.

6. The mixture according to any of claims 2 to 5, wherein the proportion of the polystyrene blocks S is in the range from 5 to 40% by weight, based on component A).

7. The mixture according to any of claims 2 to 6, wherein the 1,2-vinyl content in the styrene-butadiene copolymer block (S/B) of component A) is below 20%.

8. A process for modification of thermoplastic polymers, which comprises compounding the thermoplastic polymer with a mixture according to any of claims 1 to 7.

9. The process according to claim 8, wherein the thermoplastic polymer used comprises an acrylonitrile-butadiene-styrene polymer (ABS), acrylonitrile-styrene-acrylate polymer (ASA), standard polystyrene (GPPS), or impact-resistant polystyrene (HIPS), or a mixture thereof.

## Revendications

1. Mélange contenant
A) au moins 40% en poids d'un élastomère thermoplastique à base de styrène (S-TPE),
B) 20 à 60% en poids d'une charge organique ou inorganique choisie parmi la farine de bois, le dioxyde de titane, le talc, la craie, le kaolin, le noir de carbone, l'hydroxyde d'aluminium, l'hydroxyde de magnésium, le nitrure d'aluminium, le silicate d'aluminium, le sulfate de baryum, le carbonate de calcium, le sulfate de calcium, la silice, la poudre de quartz, l'Aérosil, l'alumine, la wollastonite ou des pigments colorés;
C) 0,1 à 10% en poids d'un dispersant, choisi parmi la cire de polyéthylène ou les stéarates,
mélange dans lequel la somme de A), B) et C) est égal à 100 % en poids.

2. Mélanges selon la revendication 1, **caractérisé en ce qu'**ils contiennent comme composant A) un copolymère séquencé styrène-butadiène présentant la structure S-(SB)-S, où S représente un bloc polystyrène et S/B est un copolymère styrène-butadiène.

3. Mélange selon la revendication 2, **caractérisé en ce que** le copolymère séquencé styrène-butadiène S/B du composant A) présente une distribution statistique des motifs styrène et butadiène.

4. Mélanges selon l'une quelconque des revendications 1 à 3, **caractérisé en ce que** le composant A) comporte de 15 à 50% en poids de butadiène et de 50 à 85% en poids de styrène.

5. Mélange selon l'une quelconque des revendications 3 à 5, **caractérisé en ce que** le copolymère styrène-butadiène (S/B) du composant A) est formé de 30 à 75% en poids de styrène et de 25 à 70% en poids de butadiène.

6. Mélange selon l'une quelconque des revendications 2 à 5, **caractérisé en ce que** la proportion de blocs de polystyrène S est dans la plage de 5 à 40 en% en poids, exprimés par rapport au composant A),

7. Mélange selon l'une quelconque des revendications 2 à 6, **caractérisé en ce que** la teneur en 1,2-vinyle dans le copolymère styrène-butadiène (S/B) du composant A) est inférieure à 20%.

8. Procédé de modification de polymères thermoplastiques, **caractérisé en ce que** le polymère thermoplastique est mélangé avec un mélange selon l'une quelconque des revendications 1 à 7.

9. Procédé selon la revendication 8, **caractérisé en ce que** comme polymère thermoplastique est utilisé un polymère acrylonitrile-butadiène-styrène (ABS), un polymère acrylonitrile-styrène-ester acrylique (ASA), un polystyrène standard (GPPS) ou un polystyrène choc (HIPS), ou leurs mélanges.
